# EUROPEAN PATENT APPLICATION

(11) **EP 2 626 825 A1**
(43) Date of publication of application: **14.08.2013**
(21) Application number: 12162870.5
(22) Date of filing: 02.04.2012
(51) Int. Cl.: G06Q 20/38, G06Q 20/32, G06Q 30/00

(54) **Method for processing electronic coupons**

(30) Priority: 08.02.2012 EP 12154463
(71) Applicant: Ludwig Maximilians Universität, 80539 München (DE)
(72) Inventor: Werner, Martin, 81549 München (DE); Linnhoff-Popien, Claudia, Prof. Dr., 85652 Landsham (DE); Verclas, Stephan, Dr., 68723 Plankstadt (DE); Scheuermann, Constantin, 80796 München (DE); Gschwandtner, Florian, 81539 München (DE)
(74) Representative: Rummler, Felix

(57) **Abstract**

There is provided a method of processing electronic coupons, comprising: allocating a unique code to each of a plurality of electronic coupons; enabling a mobile device to receive one or more of said codes, and to store said codes in a memory of the mobile device, wherein each code is associated with one or more attributes, including a value of the corresponding electronic coupon; enabling the mobile device to output a code associated with a user-selected electronic coupon to another device.

## Description

### Background

The present invention relates to a method and system for processing electronic coupons.

A coupon is generally understood to be a token or voucher that can be exchanged for a financial or other benefit when making a transaction. For example, a coupon can be cashed when making a purchase, thereby obtaining a discount. Coupons can be printed, for example in magazines, on packaging or otherwise. More recently, electronic coupons for use with computers, in particular mobile devices such as "smartphones" have become available. Various technical solutions for providing electronic coupon services are known from EP-A1-2369546, US-A1-2001/0065713, WO-A2-2008/083105, US-A1-2003/0093314 und US-A1-2009/0090207. All these solutions require that the mobile device of the user has an active internet connection; in some cases GPS localisation and telephone identification are also required. This technical constraint not only reduces the availability of the service, it also represents a security risk as data relating to the use of the service may instantly be collected. However, services that are associated with data collection may be considered objectionable and, as a result, less frequented.

In addition, the known solutions are restricted to certain (electronic) media. Moreover, known systems do not support a secure and reliable way of passing on coupons between users.

### Summary of the Invention

It is an object of the present invention to address these disadvantages. In particular, it is one object of the present invention to provide a method for managing coupons that can be implemented on mobile devices that have certain technical restrictions, for example no internet connection when a user wishes to use his/her electronic coupon. It is another object of the present invention to provide a method that incentivizes users to pass on electronic coupons from one another whilst dealing with the same technical restrictions.

The present invention is recited in the independent claims. Preferred features are recited in the sub-claims.

The present invention provides a method in which electronic coupons can be acquired, cashed or passed on to other users whilst there is no internet connection. Moreover, the method does not require localisation or identification of the user.

In particular, the present invention resides in allocating unique numbers to each coupon, and to store a list of the numbers on the user's mobile device. In addition, all operations relating to coupons (acquiring new coupons, passing on coupons to other users, cashing coupons) are allocated to unique codes stored on the user's mobile device. No access to a central server is required to perform any of these operations. Rather, the central server can be updated at a time subsequent to performing such operations.

The validity of a coupon is checked when the user wishes to use (cash) the coupon, for example at the cash register of a retailer. At this stage, data representative of the coupon is transmitted from the cash register to the server for verification. The server checks and, if applicable, confirms the validity. The server may also perform additional operations such as increasing the value of another coupon associated with the cashed coupon, as will be described in more detail below.

Upon receipt of a verification confirmation from the server, the coupon may be converted/cashed, e.g. a discount applied to a purchase.

The coupon may be read by the cash register by various methods, for example by reading a bar code displayed on the mobile device.

As a result, the management and use of electronic coupons becomes more secure and stable, as (internet) network problems, faulty configurations or incorrect use do not affect the cashing operation or the passing on of the coupon to another user. Ultimately, this renders the coupon more efficient and more likely to be used as intended by the coupon provider.

Moreover, the present invention can provide for a transparent integration of conventional promotional materials such as brochures, magazines or voucher books. Coupons from such media may be transferred to the user's mobile device (for example by entering an associated code or taking a photograph of an associated symbol or picture) and subsequently processed and spread through electronic media and social networks whilst not being affected by the aforementioned technical restrictions and security issues.

An electronic coupon can be any electronic data item that is processable by an electronic device to cause one or more parameters of a transaction to be altered.

### Description of preferred features and embodiments

### Acquiring a coupon

According to an embodiment of the invention, each coupon is associated with a large, unique random number (coupon-ID). The random number may be represented by a visual code (barcode, QR-code, EAN-code, symbol) on conventional print or digital media. The code can be read by a mobile device (smartphone) in various ways, for example taking a picture of the visual code using an integrated camera, NFC, RFID, Bluetooth, WLAN, infrared etc. Thereby, the unique number is transferred into the memory of the mobile device.

Each coupon may be associated with a web page.

The acquired coupon-ID can be used to change the coupon into another coupon; in this case the original coupon-ID is replaced with a new coupon-ID. Also, new operations associated with the new coupon may be acquired, each associated with respective unique operation IDs.

### Passing on a coupon

Coupons that are capable of being passed on from one user to another are associated with additional (new) codes. Such additional code is made available to the mobile device of a user to which the coupon is passed on. For example, a first user acquires a coupon having a coupon-ID of 0815. When the coupon is passed on to a second user, a different coupon-ID is stored in the mobile device of the second user (for example 0816). The original ("parent") coupon may be retained on the first user's mobile device, using the original coupon-ID (0815).

The coupon-ID (0816) acquired by the second user may be associated with a reference to the parent coupon-ID. When the "child" coupon (0816) is cashed, such reference may be used to reward the first user for passing on the coupon, for example by increasing the value of the parent coupon. Thereby, users are incentivized to pass on coupons to other users.

None of this requires an internet connection at the time of performing the operations. The server may be updated at some later stage. In the described example, updating would include storing information that links coupon-ID 0816 to the second user's mobile device, and increasing the value associated with coupon-ID 0815.

### Processing "child" coupons

When the bar code of a coupon is photographed using a suitable device e.g. a mobile telephone with inbuilt camera, the coupon-ID represented by the bar code is stored in the memory of the mobile telephone. At an appropriate time thereafter, when an internet connection is available, a request is made to a central server to include the coupon associated with the coupon-ID in a list of coupons associated with that mobile telephone. In response to such request, the server generates a plurality of cryptographically secure random numbers in which the coupon-ID is included. The numbers represent various parameters of the coupon (e.g. value, period of validity) and are transmitted from the server to the mobile phone for subsequent use e.g. passing on to other mobile devices.

Thereby, a structure of forwarding pointers is generated on the server. The server "knows" i.e. has stored all the random numbers. Accordingly, when a request is received for inclusion into the list of one user of a coupon that has been passed on to him by another user - i.e. a child coupon - the server identifies the corresponding parent coupon based on the random number contained in the request. Accordingly, the server is enabled to identify and store the link between the new (child) coupon - corresponding to the request - and the parent coupon.

In order to prevent any collisions, the random number is a Generally Unique ID (GUID) that can be generated by using the server time or other parameters that are difficult to predict. Thus, it is virtually impossible that one and the same random number is generated twice.

### Cashing a coupon

Various methods of cashing a coupon are feasible, all of which involve transferring the coupon-ID from the mobile device to the cash register or other device (e.g. reading a bar code displayed on the mobile device, NFC, RFID, Bluetooth, WLAN, infrared, etc.). The cash register then transmits a request to a central server to verify the coupon, in particular its validity, value, restrictions (e.g. the exclusion of certain products or suchlike). If the verification is successful, the user gets a discount or any other benefit associated with cashing the coupon. Once completed, the cash register notifies the server. The server then reduces the value of the coupon, or invalidates it, and performs associated operations such as increasing the value of a coupon that is the parent of the cashed coupon, as described above, or adding another coupon to the user's mobile device as a reward for cashing the previous coupon, etc.

### Analysis

In an embodiment of the invention, coupons are retained indefinitely. For example, coupons may "evolve" depending on their use or the use of associated parent, child or other "relative" coupons. Thereby, users are incentivized to use coupons in various ways, whilst enabling coupon providers to create new incentives. Moreover, the use of coupons can be analysed in more detail. For example, it is possible to analyse correlations between coupons, follow-up acquisition patterns, etc.

### Description of the drawings

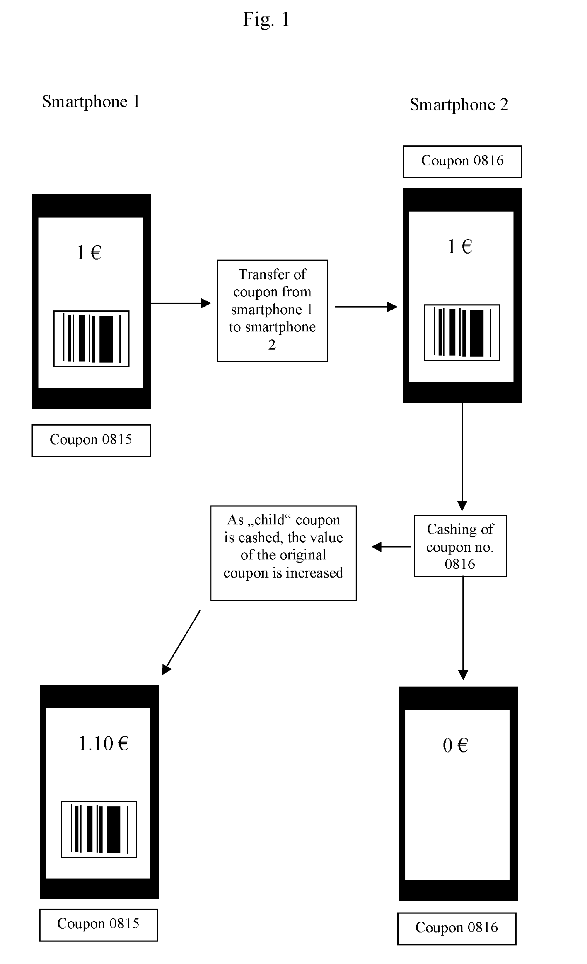

Fig. 1 illustrates the interactions that take place when a first user forwards a coupon to another user who then cashes the received coupon. In a first step, the first user obtains coupon no. 0815, for example by taking a photograph of a visual code associated with the coupon. In Fig. 1, the visual code is shown as a bar code on the display of smartphone 1. Initially, the coupon 0815 has a value of €1.

The user may pass on his coupon to another user. The coupon that is made available for transfer to smartphone 2 is associated with a different code; in the shown example that code is 0816 instead of 0815. The transfer is effected, for example, by transmitting data via a Bluetooth connection, or by having smartphone 2 making a picture of the bar code displayed in smartphone 1.

When the user cashes the coupon no. 0816, this coupon is invalidated, while the value of coupon no. 0815 is increased. For example, when the coupon no. 0816 is cashed at a cash register, the cash register transmits a notification to a server where information (attributes) relating to all coupons is centrally stored. In response to the notification, the value of the coupon no. 0815 is increased, for example from €1 to €1.10. At this stage, no internet connection between smartphone 1 and the server is required; rather, smartphone 1 may be updated at any time thereafter when an internet connection becomes available.

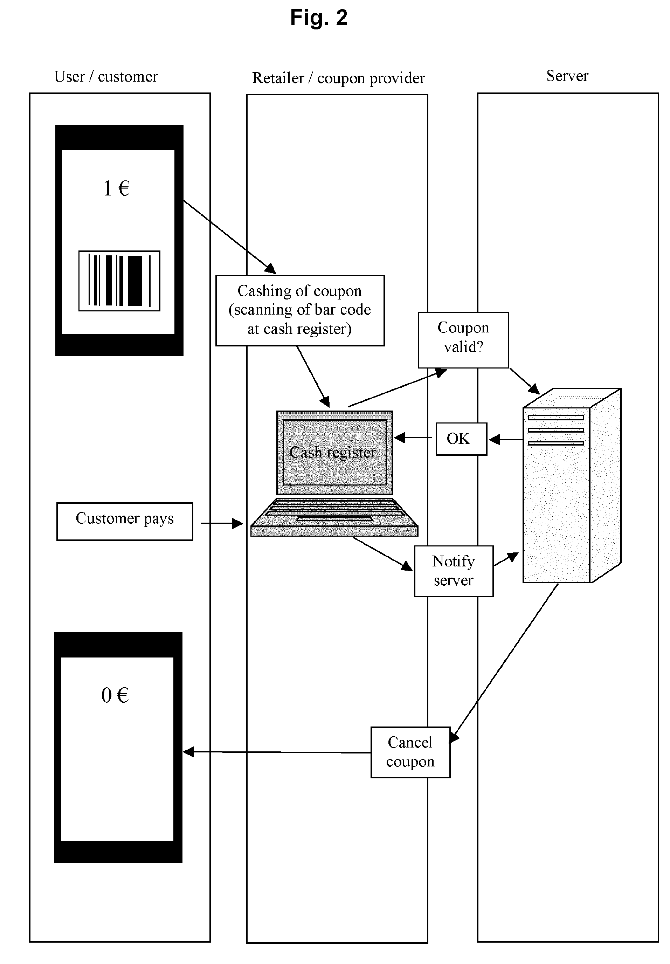

Fig. 2 illustrates the interactions that take place when a user (customer) cashes his/her coupon. In the shown example, the user cashes his coupon by having the bar code on the display of his smartphone scanned at the cash register of the coupon provider (e.g. a retailer). Thereafter, a determination is made as to whether the coupon is valid. This is done by sending a request to the central server. Upon receipt of the confirmation from the server, the cash register may process the coupon. In the shown example, this results in a reduction of the price of a purchased item by €1. Once the customer has effected payment, a notification is transmitted from the cash register to the server to invalidate the coupon.

During all these steps, no internet connection between the user's smartphone and the server is required. The smartphone may be updated to reflect invalidation of the coupon at any time thereafter when the internet connection becomes available. In particular, the only instance that requires an active internet connection is the cash register at the time of cashing the coupon. The smartphones do not require an internet connection to perform the cashing operation. All interaction with the server originates from the cash register or associated device.

In an embodiment, periodic checks are performed to ensure data consistency between the server and the smartphones, for example to implement increases in the value of coupons at the user end. However, such synchronisation can be performed at any time.

The described method ensures a secure cashing of coupons. It is impossible to cash a coupon more than once, or to forge coupons. Therefore, the present invention enables the implementation of coupons of much higher value than conventional systems.

## Claims

1. A method of processing electronic coupons, comprising:
allocating a unique code to each of a plurality of electronic coupons;
enabling a mobile device to receive one or more of said codes, and to store said codes in a memory of the mobile device, wherein each code is associated with one or more attributes, including a value of the corresponding electronic coupon;
enabling the mobile device to output a code associated with a user-selected electronic coupon to another device.

2. The method of claim 1, wherein each of said codes is associated with a respective data item stored in a central server, each data item containing information defining said one or more attributes.

3. The method of any preceding claim, further comprising enabling the server to transmit a request to the mobile device to update the attributes stored on the mobile device to correspond to the attributes stored on the server, in particular the next time internet access becomes available to the mobile device.

4. The method of any preceding claim, wherein the user-selected code is output to the other device via a local transmission path that does not require internet access by the mobile device.

5. The method of claim 2, wherein receipt of a selected one of said codes by said other device causes said other device to notify the server, thereby causing the server to change one or more of said attributes associated with the selected code.

6. The method of claim 5, wherein the other device comprises or is associated with a cash register.

7. The method of any of claims 1 to 4, wherein said other device is another mobile device, wherein the other mobile device is arranged to store the received code, and to output the received code to a further device thereby to convert the electronic coupon associated with the received code and to cause a change of the attributes associated with the received code to reflect the conversion of the electronic coupon.

8. The method of claims 2, wherein a first one of said data items includes a reference to a second one of said data items, wherein a change of the attributes defined by the first data item is accompanied by a change of the attributes of the second data item, for example an increase of the value of the electronic coupon associated with the second data item.

9. The method of any preceding claim, wherein said attributes define one or more operations that may be performed in respect of a corresponding code

10. The method of claim 9, wherein said operations include an operation enabling a user of the mobile device to output a code associated with a selected electronic coupon to another mobile device, wherein the code that is output by the mobile device is different from the code that is stored on the mobile device for said selected electronic coupon.

11. The method of claims 8 and 10, wherein said first data item is associated with the code that is output by the mobile device, and the second data item is associated with the code that is stored on the mobile device for said selected electronic coupon.

12. The method of any preceding claim, comprising:
the server receiving a request from the mobile device for inclusion of one of said codes in a list associated with the mobile device;
the server generating one or more strings each including said code and a random code, each string representing one of said attributes; and
the server storing said one or more strings in said list; and
the server transmitting said one or more strings to the mobile device for passing on to other mobile devices as one of said codes.

13. The method of claim 12, comprising:
the server identifying a link between a received code and a stored code based on said random code.

14. A mobile device comprising:
a memory storing one ore more unique codes each associated with a respective electronic coupon, and respective attributes associated with said codes, including a value of the associated electronic coupons, wherein said attributes define one or more operations that may be performed in respect of the respective codes;
user selection means to enable a user to select one of said electronic coupons;
outputting means, operable without internet access, for outputting a code associated with the selected electronic coupon, wherein the code varies depending on whether the code is output to convert, e.g. cash, the associated electronic coupon, or whether the code is output to pass on or copy the electronic coupon to the mobile device of another user; and
receiving means to receive update information from a remote server to update said attributes associated in response to an operation performed in respect of the selected electronic coupon.

15. An article storing instructions that, when executed by a data processing system, cause the method of any of claims 1 to 13 to be performed.
